# EUROPÄISCHE PATENTSCHRIFT

(11) **EP 3 374 230 B1**
(45) Veröffentlichungstag und Bekanntmachung des Hinweises auf die Patenterteilung: **11.09.2019**
(21) Anmeldenummer: 16794595.5
(22) Anmeldetag: 09.11.2016
(51) Int. Cl.: B60N 2/30

(54) **SITZEINRICHTUNG FÜR EIN FAHRZEUG**
SEATING DEVICE FOR A VEHICLE
DISPOSITIF DE SIÈGE POUR UN VÉHICULE

(30) Priorität: 10.11.2015 DE 102015222093
(43) Veröffentlichungstag der Anmeldung: 19.09.2018
(73) Patentinhaber: Volkswagen Aktiengesellschaft, 38440 Wolfsburg (DE)
(72) Erfinder: SZLAG, Robert, 38440 Wolfsburg (DE)
(86) Internationale Anmeldenummer: PCT/EP2016/077153
(87) Internationale Veröffentlichungsnummer: WO 2017/081088

(56) Entgegenhaltungen:
- WO-A1-2011/076334
- JP-A- 2006 347 304
- JP-A- 2008 062 829

## Beschreibung

Die Erfindung betrifft eine Sitzeinrichtung für ein Fahrzeug, mit einem Sitzteil und mit einer Rückenlehne, die an einem fest angeordneten Träger verschwenkbar zu dem Sitzteil gelagert ist, sodass sie in eine aufgestellte Gebrauchsstellung und in eine zumindest im Wesentlichen parallel zum Sitzteil, insbesondere auf das Sitzteil abgelegte Nichtgebrauchsstellung verschwenkbar ist, und mit einem mit einem Ende an der Rückenlehne befestigten Zugmittel zum Aufstellen der Rückenlehne in die Gebrauchsstellung.

Sitzeinrichtungen der eingangs genannten Art sind aus dem Stand der Technik bekannt. Um einem Benutzer das Aufstellen oder Ablegen einer Rückenlehne in einem Kraftfahrzeug zu erleichtern, ist es bekannt, der Rückenlehne ein Zugmittel insbesondere in Form einer Zugschlaufe zuzuordnen, mittels derer der Benutzer die Rückenlehne insbesondere von der Nichtgebrauchsstellung in die Gebrauchsstellung aufstellen beziehungsweise aufziehen kann. So offenbart es beispielsweise die deutsche Patentschrift DE 699 589 B1, einer Rückenlehne eine Zugschlaufe zuzuordnen, die es dem Benutzer ermöglicht, die Rückenlehne bei Bedarf aufzustellen. Die Zugschlaufe bietet dabei dem Benutzer einen Hebelmechanismus, welcher das Aufstellen der Rückenlehne vereinfacht.

Nachteilig bei bekannten Lösungen ist es, dass dann, wenn die Rückenlehne flach auf dem Sitzteil aufliegt, der Benutzer eine hohe Kraft aufwenden muss, um mittels der Zugschlaufe die Rückenlehne aufzustellen, insbesondere dann, wenn er die Zugkraft parallel zur Längserstreckung der Rückenlehne erzeugt. Unter der Längserstreckung der Rückenlehne ist dabei die Vertikalerstreckung der Rückenlehne in aufgestellter Gebrauchsstellung beziehungsweise die Erstreckung der Rückenlehne von dem Sitzteil in Richtung eines Kopfteils zu verstehen.

Aus der Offenlegungsschrift JP 2006 347304 A geht eine Sitzeinrichtung hervor, die ein Getriebe zum Aufstellen einer Rückenlehne aufweist. Aus der Offenlegungsschrift JP 2008 062829 A ist außerdem eine Sitzeinrichtung bekannt, mit einem der Rückenlehne zugeordneten Zugmittel, mithilfe dessen die Rückenlehne aus einer Nicht-Gebrauchsstellung in eine Gebrauchsstellung aufziehbar ist. Außerdem ist aus der Offenlegungsschrift WO 2011/076334 A1 ein Lehnenklappmechanismus für einen Fahrzeugsitz bekannt, der ein fern von einer Rückenlehne angeordnetes Betätigungselement aufweist, das auf den Lehnenklappmechanismus einwirkt, um ein Ver- und Entriegelungselement der Rückenlehne gegenüber einem karosserieseitigen Halteelement fern zu entriegeln.

Der Erfindung liegt somit die Aufgabe zugrunde, eine Sitzeinrichtung zu schaffen, die ein besonders einfaches Aufstellen der Rückenlehne für den Benutzer ermöglicht, wobei insbesondere der zum Aufstellen notwendige Kraftaufwand verringert und ein Aufziehen der Rückenlehne auch dann ermöglicht wird, wenn die Zugkraft parallel zur Längserstreckung der Lehne erzeugt wird.

Die der Erfindung zugrundeliegende Aufgabe wird durch eine Sitzeinrichtung mit den Merkmalen des Anspruchs 1 gelöst. Diese weist den Vorteil auf, dass der Benutzer jederzeit mit geringem Kraftaufwand die Rückenlehne in die aufgestellte Gebrauchsposition mittels des Zugmittels verbringen kann. Dazu ist erfindungsgemäß vorgesehen, dass das Ende des Zugmittels einer Hebelvorrichtung zugeordnet ist, die einen durch das Zugmittel betätigbaren Hebel aufweist, der zumindest in der Nichtgebrauchsstellung der Rückenlehne mit der Rückenlehne einerseits und mit dem Träger andererseits wirkverbunden ist, und bei einer Betätigung die Rückenlehne mit einem Drehmoment zum Aufstellen der Rückenlehne in die Gebrauchsstellung beaufschlagt. Das Zugmittel, das insbesondere als Zugseil oder Zugschlaufe ausgebildet ist, ist somit nicht direkt mit der Rückenlehne verbunden, sondern mit der Hebelvorrichtung, welche ein Drehmoment auf die Rückenlehne ausübt, wenn an dem Zugmittel gezogen wird. Durch die Hebelvorrichtung wird die auf das Zugmittel aufgebrachte Zugkraft vorteilhaft umgelenkt, sodass auch dann, wenn die Zugkraft parallel zur Längserstreckung der Rückenlehne wirkt, mittels der Hebelvorrichtung ein Drehmoment zum Aufstellen der Rückenlehne erzeugt wird. Dadurch wird das Aufstellen der Rückenlehne für den Benutzer deutlich vereinfacht. Durch die Hebelvorrichtung wird ein zusätzlicher Hebelmechanismus zur Kraftumlenkung und- Wandlung genutzt.

Erfindungsgemäß ist vorgesehen, dass der Hebel an der Rückenlehne durch ein Gelenk verschwenkbar gelagert ist, wobei ein von dem Gelenk ausgehender erster Hebelarm des Hebels auf dem Träger aufliegt. Gemäß dieser Ausführungsform ist der Hebel also an der Rückenlehne verschwenkbar gelagert und liegt einendig auf dem Träger auf. Wird somit der Hebel insbesondere an seinen zweiten beziehungsweise anderen Ende mit einer Betätigungskraft beauschlagt, so wird das auf den Träger aufliegende Ende mit einer Kraft beaufschlagt, wodurch das Gelenk der Hebelvorrichtung gegenüber dem Träger angehoben und dadurch die Rückenlehne verschwenkt wird. Dadurch, dass der Hebel auf dem Träger aufliegt, wird eine besonders einfache und kostengünstige Lösung der Hebelvorrichtung geboten. Zweckmäßigerweise liegt dabei das Gelenk der Hebelvorrichtung beabstandet zu der Schwenkachse, um welche die Rückenlehne von der Nichtgebrauchsstellung in die Gebrauchsstellung verschwenkbar ist.

Weiterhin ist bevorzugt vorgesehen, dass einem von dem Gelenk ausgehenden zweiten Hebelarm des Hebels das Ende des Zugmittels beziehungsweise der Zugschlaufe zugeordnet ist. Somit bewirkt das Ziehen des Zugmittels ein Verschwenken des Hebels um die Achse des Gelenks und dadurch ein Anheben der Rückenlehne in Richtung der Gebrauchsposition. Durch den Hebel wird die Position der Krafteinleitung des Zugmittels von der Stelle, an welcher die Kraft zum Verschwenken der Rückenlehne genutzt wird, getrennt, wodurch sich eine vorteilhafte Hebelwirkung ergibt, die das Aufstellen der Rückenlehne erleichtert. Dadurch, dass das Ende der Zugschlaufe dem zweiten Hebelarm, insbesondere dem freien Ende des zweiten Hebelarms, zugeordnet ist, ist eine maximale Kraftausnutzung zum Aufstellen der Rückenlehne möglich.

Gemäß einer bevorzugten Weiterbildung der Erfindung ist vorgesehen, dass der erste Hebelarm kürzer ausgebildet ist als der zweite Hebelarm. Dadurch ist es möglich, dass der Benutzer mit geringem Kraftaufwand ein hohes Drehmoment auf die Rückenlehne ausüben kann, um diese von der Nichtgebrauchsstellung in Richtung der Gebrauchsstellung zu verschwenken. Dabei ist die Unterstützung des Benutzers auf die Hebelvorrichtung insbesondere in der Anfangsphase, also ausgehend von der Nichtgebrauchsstellung von Vorteil, sobald die Rückenlehne einen kritischen Schwenkwinkel in Richtung der Gebrauchsstellung überschritten hat, ergibt sich durch das Zugband automatisch, wie bei konventionellen Lösungen auch, ein vorteilhafter Winkel und ein einfaches Aufziehen der Rückenlehne. Die Hebelvorrichtung ist daher zweckmäßigerweise dazu ausgebildet, das Aufstellen der Rückenlehne im Wesentlichen, insbesondere nur zu Beginn der Aufstellbewegung zu unterstützen.

Weiterhin ist bevorzugt vorgesehen, dass das Ende des Zugmittels oder der Zugschlaufe an einem verschiebbar an der Rückenlehne angeordneten Betätigungselement befestigt ist, und dass der zweite Hebelarm im Bewegungsweg des Betätigungselement liegt. Das Zugmittel ist somit nicht direkt mit dem Hebel verbunden, sondern dient dazu, ein Betätigungselement an der Rückenlehne entlang zu verschieben, wobei das Betätigungselement den im Bewegungsweg liegenden zweiten Hebelarm beim Verschieben mit einer Kraft beaufschlagt, wodurch das Drehmoment zum Aufstellen der Rückenlehne erzeugt wird, weil der erste Hebelarm auf den Träger aufliegt. Dadurch, dass die Zugschlaufe dazu dient, das Betätigungselement zu verlagern, ist an dem Hebel eine besonders hohe Kraft erzeugbar, die zum Aufstellen der Rückenlehne genutzt wird. Indem der Benutzer an dem Zugmittel zieht, bewegt sich das Betätigungselement gegen den Hebel. In Abhängigkeit von der Ausgangsstellung des Hebels bezüglich des Betätigungselements bei Beginn der Zugbewegung, wird ein höheres oder niedrigeres Drehmoment durch die Hebelvorrichtung erzeugt. Insbesondere ist vorgesehen, dass der zweite Hebelarm des Hebels und der maximale Bewegungsweg des Betätigungselements derart lang ausgebildet sind, dass der Hebel über den gesamten Bewegungsweg des Betätigungselements durch das Betätigungselement mit einer Kraft beaufschlagt und um das Gelenk herum verschwenkt wird. Vorzugsweise ist der erste Hebelarm schräg zur Bewegungsrichtung des Betätigungselements insbesondere zu Beginn der Bewegung ausgerichtet, sodass auch zu Beginn der Bewegung keine hohe Inertialkraft ausgeübt werden muss, um die Hebelvorrichtung zu betätigen.

Bevorzugt ist vorgesehen, dass das Betätigungselement in Längserstreckung der Rückenlehne verschiebbar gelagert ist. Damit ist das Betätigungselement ausgehend von dem Sitzteil in Richtung des Kopfteils an der Rückenlehne verlagerbar. Dadurch ist ein großer Bewegungsweg möglich, welcher das Aufrichten der Rückenlehen erleichtert. Bevorzugt ist oberhalb der Hebelvorrichtung beziehungsweise am oberen beziehungsweise dem Kopfteil zugeordneten Ende der Rückenlehne eine Umlenkung vorgesehen, um welche die Zugschlaufe herumgeführt ist, sodass der Benutzer das Betätigungselement in Richtung des Kopfendes der Rückenlehne bewegt, wenn er an dem Zugmittel zieht. Dies ist insbesondere dann von Vorteil, wenn sich die Rückenlehne in der auf dem Sitzteil aufliegenden Nichtgebrauchsposition befindet und der Benutzer das Zugmittel hinter der Rückenlehne beziehungsweise dem Sitzteil greift und an diesem zieht.

Weiterhin ist bevorzugt vorgesehen, dass das Betätigungselement durch eine Führungsschiene an der Rückenlehne verlagarbar ist. Dadurch ist eine sichere Führung des Betätigungselements gewährleistet, die insbesondere sicherstellt, dass das Betätigungselement eine hohe Kraft auf den Hebel ausüben kann, ohne selbst nachzugeben.

Weiterhin ist bevorzugt vorgesehen, dass der Träger einen Betätigungsvorsprung aufweist, auf welchem der erste Hebelarm aufliegt. Der Betätigungsvorsprung gewährleistet, dass bei der Aufstellbewegung der Rückenlehne kein Konflikt zwischen Hebelvorrichtung und Träger entsteht, der ein weiteres Aufstellen der Rückenlehne verhindern könnte. Darüber hinaus bietet der Betätigungsvorsprung eine definierte Auflage für den ersten Hebelarm und ist insbesondere aus einem Material gefertigt, das gute Gleiteigenschaften in Verbindung mit dem ersten Hebelarm gewährleistet, um den Verschleiß der Hebelvorrichtung zu minimieren.

Gemäß einer bevorzugten Weiterbildung der Erfindung ist vorgesehen, dass das Gelenk beabstandet zu einer Längsmittellinie der Rückenlehne angeordnet/ausgebildet ist. Dadurch wird die Hebelwirkung der Hebelvorrichtung vorteilhaft verstärkt und ein Aufstellen der Rückenlehne vereinfacht.

Weiterhin ist bevorzugt vorgesehen, dass die Rückenlehne an dem Träger durch ein Schwenkgelenk um eine Schwenkachse verschwenkbar gelagert ist, wobei die Schwenkachse auf der dem Gelenk gegenüberliegenden Seite der Längsmittellinie der Rückenlehne angeordnet ist. Dadurch ist der Abstand zwischen dem Gelenk und dem Schwenkgelenk maximiert und die Erzeugung des die Rückenlehne in die aufgerichtete Gebrauchsstellung beaufschlagenden Drehmoments optimiert.

Anhand der Zeichnung sollen die Erfindung und ihre Vorteile näher erörtert werden. Dazu zeigen
- Figur 1: eine Sitzeinrichtung eines Fahrzeugs in einer Nichtgebrauchsstellung,
- Figur 2: die Sitzeinrichtung in einer ersten Zwischenstellung,
- Figur 3: die Sitzeinrichtung in einer zweiten Zwischenstellung und
- Figur 4: die Sitzeinrichtung in einer Gebrauchsstellung, jeweils in einer vereinfachten Seitenansicht.

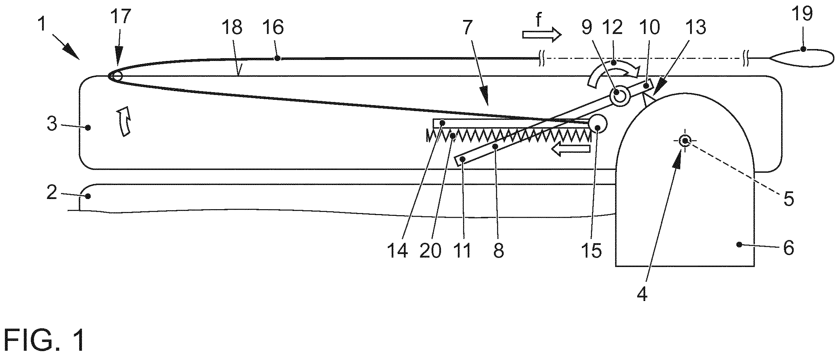

Figur 1 zeigt in einer vereinfachten Seitenansicht eine Sitzeinrichtung 1 für ein Fahrzeug, insbesondere Kraftfahrzeug, die ein Sitzteil 2 und eine Rückenlehne 3 aufweist. die Rückenlehne 3 ist durch ein Schwenkgelenk 4 um eine Schwenkachse 5 derart verschwenkbar gelagert, dass die Rückenlehne 3 in eine Nichtgebrauchsstellung zumindest im Wesentlichen parallel zu und/oder auf dem Sitzteil 2 im Wesentlichen aufliegt, wie in Figur 1 gezeigt, und in einer Gebrauchsstellung um etwa 90° mit einem freien Kopfende nach oben aufgeschwenkt beziehungsweise aufgestellt in einer Gebrauchsstellung arretierbar ist. Die Rückenlehne 3 ist dabei an einem Träger 6 um die Schwenkachse 5 gelagert, welcher fest mit dem Sitzteil 2 und/oder einer die Sitzeinrichtung 1 aufnehmenden Fahrzeugkarosserie verbunden beziehungsweise verbindbar ist. Das Schwenkgelenk 4 ist dabei an dem sitzteilseitigen Ende der Rückenlehne 3 angeordnet.

Die Sitzteileinrichtung 1 weist weiterhin eine Hebelvorrichtung 7 auf, die einen Benutzer beim Aufstellen der Rückenlehne 3 in die ausgestellte Gebrauchsposition ausgehend von der Nichtgebrauchsposition unterstützt. Die Hebelvorrichtung 7 weist dabei einen Hebel 8 auf, der durch ein Gelenk 9 an der Rückenlehne 3 verschwenkbar gelagert ist. Der Hebel 9 ist dabei insbesondere an einer der Seitenflächen in oder an der Rückenlehne 3 angeordnet. Der Hebel 8 weist einen ersten Hebelarm 10 und einen zweiten Hebelarm 11 auf, die auf einer gemeinsamen Geraden angeordnet sind, wobei zwischen ihnen das Gelenk 9 ausgebildet ist, sodass der erste Hebelarm 10 den von dem Gelenk 9 sich in eine erste Richtung erstreckenden Abschnitt des Hebels 8 und der Hebelarm 11 den sich von dem Gelenk 9 in die entgegengesetzte Richtung erstreckenden Abschnitt des Hebels 8 bildet. Wird der Hebelarm 11 somit nach oben im Uhrzeigersinn verschwenkt, wie in Figur 1 durch einen Pfeil 12 gezeigt, so wird der Hebelarm 10 nach unten entsprechend im Uhrzeigersinn verschwenkt. Der Hebelarm 11 ist dabei deutlich länger ausgebildet als der Hebelarm 10, vorliegend etwa fünfmal so lang.

Der Hebelarm 10 liegt dabei in der Ausgangsstellung beziehungsweise Nichtgebrauchsstellung auf einem Betätigungsvorsprung 13 auf, der an dem Träger 6 ausgebildet ist. Damit stützt sich der Hebel 8 an dem Ende des Hebelarms 10 auf dem Betätigungsvorsprung 13 ab. Der Hebelarm 11 erstreckt sich über eine Führungsschiene 14 hinaus, welche an der Rückenlehne 3 angeordnet ist, sodass sie sich in Längserstreckung der Rückenlehne 3, also von dem sitzteilseitigen Ende zu dem kopfteilseitigen Ende, erstreckt. Insbesondere erstreckt sich die Führungsschiene dabei geradlinig. An der Führungsschiene 14 ist ein Betätigungselement 15 verschiebbar gelagert. Das Betätigungselement 15 ist beispielsweise als Bolzen- oder Rollenelement ausgebildet, dessen Mittelachse beziehungsweise Drehachse sich senkrecht zur Längserstreckung der Führungsschiene 14 erstreckt. Das sich in seiner Ausgangsstellung an einem ersten Ende der Führungsschiene 14 befindliche Betätigungselement 15 ist mit einem Zugmittel 16 fest verbunden, das an einer Umlenkung 17 im Bereich des kopfseitigen Endes der Rückenlehne 3 umgelenkt wird, sodass es an der Rückseite 18 der Rückenlehne 3 zu dem sitzteilseitigen Ende umgelenkt verläuft. Insbesondere weist das Zugmittel an seinem freien, dem sitzteilseitigen Ende der Rückenlehne 3 zugeordneten Ende eine Handhabe 19, insbesondere Handschlaufe, auf, die vom Benutzer greifbar ist. Das Zugmittel 16 ist somit vorliegend als Zugschlaufe ausgebildet.

Um die Rückenlehne 3 von der Nichtgebrauchsposition in die Gebrauchsposition zu verschwenken, zieht ein Benutzer an der Handhabe 19 des Zugmittels 16 mit einer Kraft f nach hinten beziehungsweise von dem kopfseitigen Ende der Rückenlehne 3 zu dem sitzteilseitigen Ende. Aufgrund der Umlenkung 17, die beispielsweise durch eine Umlenkrolle gebildet wird, wie in Figur 1 gezeigt, wird dadurch das Betätigungselement 15 zu dem kopfseitigen Ende hin entlang der Führungsschiene 14 verschoben. In seinem Bewegungsweg liegt jedoch der Hebelarm 11 des Hebels 8, sodass das Betätigungselement 15 gegen den Hebelarm 11 gedrängt wird. Weil der Hebelarm 10 des Hebels 8 auf dem Betätigungsvorsprung 13 des Trägers 6 aufliegt, ergibt sich in Folge einer Weiterbewegung des Betätigungselements 15, dass einerseits der Hebel 8 um das Gelenk 9 beziehungsweise dessen Drehachse im Uhrzeigersinn, wie durch Pfeil 12 gezeigt, verschwenkt wird, und dass andererseits dadurch das Gelenk 9 durch den sich an dem Betätigungsvorsprung 13 abstützenden Hebelarm 10 in Bezug auf die Schwenkachse 5 angehoben wird, wodurch ein Drehmoment auf die Rückenlehne 3 ausgeübt wird, welches die Rückenlehne 3 von der Nichtgebrauchsposition anhebt und in Richtung der Gebrauchsposition um die Schwenkachse 5 verschwenkt.

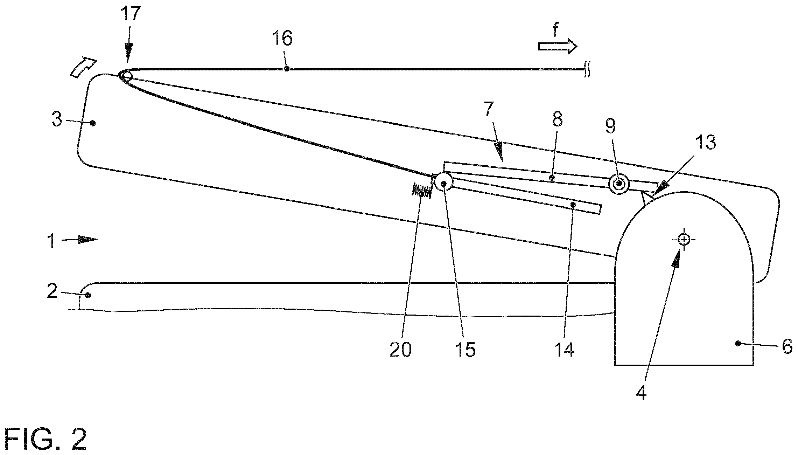

Figur 2 zeigt hierzu die Sitzeinrichtung 1 in einem Zustand, in welchem die Zugschlaufe derart weit gezogen wurde, dass das Betätigungselement 15 bis an das andere Ende der Führungsschiene 14 gelangt ist, sodass durch das Betätigungselement 15 der Hebel 8 beziehungsweise der Hebelarm 11 maximal weit ausgelenkt wurde. In diesem Zustand ist die Rückenlehne 3 bereits von dem Sitzteil 2 angehoben ausgerichtet und um einen Winkel von vorliegend etwa 30° verschwenkt. Selbstverständlich kann der Winkel in Abhängigkeit von den Längen der Hebelarme 10, 11 sowie der Anordnung des Gelenks 9 zu dem Schwenkgelenk 4 auch anders gestaltet werden, insbesondere größer oder kleiner ausfallen. Das kopfseitige Ende der Rückenlehne 3 wurde somit durch die Hebelvorrichtung 7 angehoben, ohne dass der Benutzer hierfür eine große Kraft aufwenden musste, weil die Hebelvorrichtung 7 eine vorteilhafte Kraft- und Drehmomentübertragung ermöglicht.

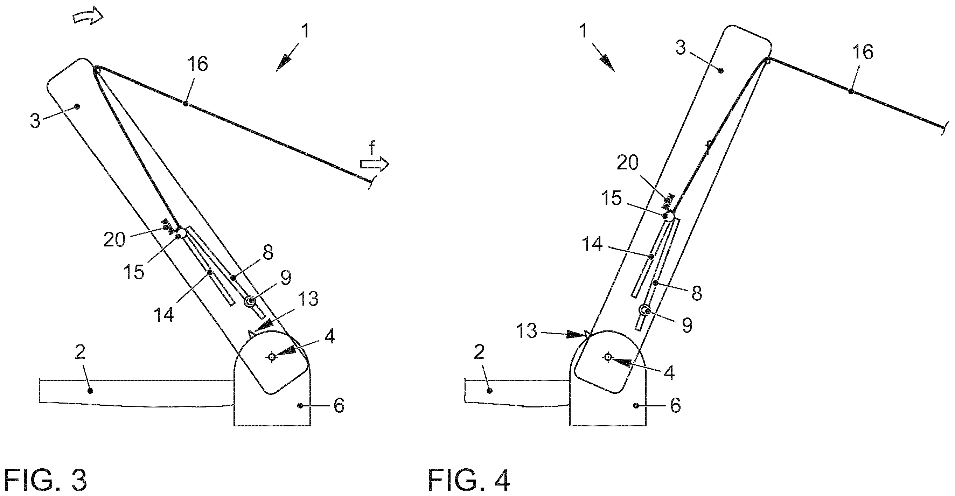

In der in Figur 2 gezeigten Zwischenstellung liegt damit der von der Umlenkung 17 zu dem Benutzer beziehungsweise zur Handhabe 13 laufende Abschnitt der Zugschlaufe nicht mehr parallel zur Rückseite beziehungsweise zur Längserstreckung der Rückenlehne 3, sondern in einem Winkel dazu, sodass wenn der Benutzer nun weiter an der Zugschlaufe 16 zieht, er diese einfach weiter in Richtung der Gebrauchsposition verschwenken kann, wie in Figur 3 beispielhaft in einer weiteren Zwischenstellung gezeigt. Aufgrund des Weiterverschwenkens um die Schwenkachse 5 löst sich dabei der Hebel 8 beziehungsweise der Hebelarm 10 von dem Betätigungsvorsprung 13 des Trägers 6, sodass die Hebelvorrichtung 7 keinen weiteren Einfluss mehr auf die Weiterbewegung der Rückenlehne 3 hat. Weil der Winkel zwischen Zugschlaufe 16 und Rückenlehne 3 mit zunehmendem Schwenkwinkel der Rückenlehne 3 weiter zunimmt, wie in Figur 3 gezeigt, ist es für den Benutzer einfacher die Rückenlehne 3 immer weiter in die Gebrauchsstellung zu bewegen.

Figur 4 zeigt die Rückenlehne 3 in ihrer Gebrauchsstellung, in welcher sie um mehr als 90° aus der Nichtgebrauchsstellung im Uhrzeigersinn gemäß Pfeil 12 verschwenkt wurde. In der Gebrauchsstellung wird die Rückenlehne 3 vorzugsweise bezüglich des Trägers 6 oder des Sitzteils 2 verrastet, dass sie dort mechanisch gehalten ist. Löst der Benutzer nun die auf die Zugschlaufe 16 ausgeübte Zugkraft, verbleibt die Rückenlehne 3 in ihrer Gebrauchsstellung.

Optional ist dem Betätigungselement 15 ein Federelement 20 zugeordnet, welches das Betätigungselement 15 entgegen der Zugkraft des Zugmittels 16 in Richtung seiner Ausgangsstellung entlang der Führungsschiene 14 drängt. Löst somit der Benutzer die Zugkraft an der Zugschlaufe, so wird das Betätigungselement 15 in seine Ausgangsstellung zurückbewegt, und damit auch die Zugschlaufe wieder eingezogen. Wird nun die Arretierung der Rückenlehne 3 gelöst und die Rückenlehne 3 in ihre Nichtgebrauchsstellung entgegen dem Uhrzeigersinn zurück verschwenkt, so gelang der Hebelarm 10 erneut in Anlagekontakt mit dem Betätigungsvorsprung 13 und die Rückenlehne 3 kann erneut, wie zuvor bereits beschrieben, aufgestellt werden.

Die vorteilhafte Ausbildung der Sitzeinrichtung 1 erlaubt es somit dem Benutzer ohne hohen Kraftaufwand mittels der Unterstützung der Hebelvorrichtung 7 die Rückenlehne 3 mittels einer Zugschlaufe auf einfache Art und Weise von der Nichtgebrauchsstellung in die Gebrauchsstellung aufzurichten.

### Bezugszeichenliste

- 1: Sitzeinrichtung
- 2: Sitzteil
- 3: Rückenlehne
- 4: Schwenkgelenk
- 5: Schwenkachse
- 6: Träger
- 7: Hebelvorrichtung
- 8: Hebel
- 9: Hebel
- 10: Hebelarm
- 11: Hebelarm
- 12: Pfeil
- 13: Betätigungsvorsprung
- 14: Führungsschiene
- 15: Betätigungselement
- 16: Zugmittel
- 17: Umlenkung
- 18: Rückseite
- 19: Handhabe
- 20: Federelement

## Patentansprüche

1. Sitzeinrichtung (1) für ein Fahrzeug, mit einem Sitzteil (2) und mit einer Rückenlehne (3), die an einem fest angeordneten Träger (6) verschwenkbar zu dem Sitzteil (2) gelagert ist, sodass sie in eine aufgestellte Gebrauchsstellung und in eine zumindest im Wesentlichen parallel zu dem Sitzteil (2) abgelegte Nichtgebrauchsstellung verschwenkbar ist, und mit einem mit einem Ende an der Rückenlehne (3) befestigten Zugmittel (16) zum Aufstellen der Rückenlehne (3) in die Gebrauchsstellung, wobei das Ende des Zugmittels (16) einer an der Rückenlehne (3) angeordneten Hebelvorrichtung (7) zugeordnet ist, die einen durch das Zugmittel (16) betätigbaren Hebel (8) aufweist, der zumindest in der Nichtgebrauchsstellung mit dem Träger (6) wirkverbunden ist und bei einer Betätigung die Rückenlehne (3) mit einem Drehmoment zum Aufstellen der Rückenlehne (3) in Richtung der Gebrauchsstellung beaufschlagt, **dadurch gekennzeichnet, dass** der Hebel (8) an der Rückenlehne (3) durch ein Gelenk (9) verschwenkbar gelagert ist, wobei ein von dem Gelenk (9) ausgehender erster Hebelarm (10) des Hebels (8) auf dem Träger (6) aufliegt.

2. Sitzeinrichtung nach Anspruch 1, **dadurch gekennzeichnet, dass** einem von dem Gelenk (9) ausgehenden zweiten Hebelarm (11) des Hebels (8) das Ende des Zugmittels (16) zugeordnet ist.

3. Sitzeinrichtung nach einem der vorhergehenden Ansprüche, **dadurch gekennzeichnet, dass** der erste Hebelarm (10) kürzer ausgebildet ist als der zweite Hebelarm (11).

4. Sitzeinrichtung nach einem der vorhergehenden Ansprüche, **dadurch gekennzeichnet, dass** das Ende des Zugmittels (16) an einem verschiebbar an der Rückenlehne (3) angeordneten Betätigungselement (15) befestigt ist, und dass der zweite Hebelarm (11) im Bewegungsweg des Betätigungselements (15) liegt.

5. Sitzeinrichtung nach Anspruch 4, **dadurch gekennzeichnet, dass** das Betätigungselement (15) in Längserstreckung der Rückenlehne (3) verschiebbar gelagert ist.

6. Sitzeinrichtung nach einem der Ansprüche 4 und 5, **dadurch gekennzeichnet, dass** das Betätigungselement (15) durch eine Führungsschiene (14) an der Rückenlehne (3) verschiebbar gelagert ist.

7. Sitzeinrichtung nach einem der vorhergehenden Ansprüche, **dadurch gekennzeichnet, dass** der Träger (6) einen Betätigungsvorsprung (13) aufweist, auf welchem der erste Hebelarm (10) zumindest in der Nichtgebrauchsstellung der Rückenlehne (3) aufliegt.

8. Sitzeinrichtung nach einem der vorhergehenden Ansprüche, **dadurch gekennzeichnet, dass** das Gelenk (9) beabstandet zu einer Längsmittellinie der Rückenlehne (3) angeordnet/ausgebildet ist.

9. Sitzeinrichtung nach Anspruch 8, **dadurch gekennzeichnet, dass** die Rückenlehne (3) an dem Träger (6) durch ein Schwenkgelenk (4) um eine Schwenkachse (5) verschwenkbar gelagert ist, wobei die Schwenkachse (5) auf der dem Gelenk (9) gegenüberliegenden Seite der Längsmittellinie der Rückenlehne (3) angeordnet ist.

## Claims

1. A seat unit (1) for a vehicle, having a seat part (2) and having a backrest (3), that is mounted pivotably relative to the seat part (2) on a fixedly arranged carrier (6), so that it can be pivoted into an upright use position and into an inclined non-use position that is at least substantially parallel to the seat part (2), and having a pulling means (16) attached to one end of the backrest (3) for deploying the backrest (3) into the use position, wherein the end of the pulling means (16) is assigned to a lever device (7) arranged on the backrest (3), which has a lever (8) that can be actuated by the pulling means (16), which lever is operatively connected to the carrier (6) in at least one non-use position and during an actuation applies a torque to the backrest (3) to deploy the backrest (3) in the direction of the use position, **characterized in that** the lever (8) is mounted pivotably on the backrest (3) by means of a joint (9), wherein a first lever arm (10) of the lever (8) originating from the joint (9) rests on the carrier (6).

2. The seat unit according to Claim 1, **characterized in that** the end of the pulling means (16) is assigned to a second lever arm (11) of the lever (8) originating from the joint (9).

3. The seat unit according to any one of the preceding claims **characterized in that** the first lever arm (10) is designed shorter than the second lever arm (11).

4. The seat unit according to any one of the preceding claims, **characterized in that** the end of the pulling means (16) is attached to an actuating element (15) arranged displaceably on the backrest (3) and that the second lever arm (11) lies in the path of movement of the actuating element (15).

5. The seat unit according to Claim 4, **characterized in that** the actuating element (15) is mounted displaceably in the longitudinal extension of the backrest (3).

6. The seat unit according to any one of Claims 4 and 5, **characterized in that** the actuating element (15) is mounted displaceably by means of a guide rail (14) on the backrest (3).

7. The seat unit according to any one of the preceding claims, **characterized in that** the carrier (6) has an actuating projection (13), on which the first lever arm (10) rests at least in the non-use position of the backrest (3).

8. The seat unit according to any one of the preceding claims, **characterized in that** the joint (9) is designed / arranged spaced apart from a longitudinal center line of the backrest (3).

9. The seat unit according to Claim 8, **characterized in that** the backrest (3) is mounted pivotably about a pivot axis (5) by means of a pivot joint (4) on the carrier (6), wherein the pivot axis (5) is arranged on the side of the longitudinal center line of the backrest (3) opposite the joint (9).

## Revendications

1. Ensemble de siège (1) pour un véhicule, avec une partie d'assise (2) et avec un dossier (3) qui est supporté sur un support (6) disposé de façon fixe et pouvant pivoter par rapport à la partie d'assise (2) de telle sorte que le dossier peut être amené par pivotement dans une position d'utilisation relevée et dans une position de non-utilisation posée au moins essentiellement parallèlement à la partie d'assise (2), et avec un moyen de traction (16) fixé à une extrémité sur le dossier (3) pour relever le dossier (3) dans la position d'utilisation, dans lequel l'extrémité du moyen de traction (16) est affectée à un dispositif de levier (7), disposé sur le dossier (3), qui comporte un levier (8) actionnable par le moyen de traction (16) qui est lié fonctionnellement au support (6) au moins dans la position de non-utilisation et qui lors d'un actionnement soumet le dossier (3) à un couple pour relever le dossier (3) en direction de la position d'utilisation, **caractérisé en ce que** le levier (8) est supporté de façon pivotante sur le dossier (3) par une articulation (9), dans lequel un premier bras de levier (10) du levier (8) partant de l'articulation (9) repose sur le support (6).

2. Ensemble de siège selon la revendication 1, **caractérisé en ce que** l'extrémité du moyen de traction (16) est affectée à un deuxième bras de levier (11) du levier (8) partant de l'articulation (9).

3. Ensemble de siège selon l'une des revendications précédentes, **caractérisé en ce que** le premier bras de levier (10) est constitué de façon plus courte que le deuxième bras de levier (11).

4. Ensemble de siège selon l'une des revendications précédentes, **caractérisé en ce que** l'extrémité du moyen de traction (16) est fixée sur un élément d'actionnement (15) disposé de façon déplaçable sur le dossier (3), et **en ce que** le deuxième bras de levier (11) est situé sur le trajet de mouvement de l'élément d'actionnement (15).

5. Ensemble de siège selon la revendication 4, **caractérisé en ce que** l'élément d'actionnement (15) est supporté de façon déplaçable dans l'étendue longitudinale du dossier (3).

6. Ensemble de siège selon l'une des revendications 4 et 5, **caractérisé en ce que** l'élément d'actionnement (15) est supporté sur le dossier (3) de façon déplaçable par un rail de guidage (14).

7. Ensemble de siège selon l'une des revendications précédentes, **caractérisé en ce que** le support (6) comporte une saillie d'actionnement (13) sur laquelle repose le premier bras de levier (10) au moins dans la position de non-utilisation du dossier (3).

8. Ensemble de siège selon l'une des revendications précédentes, **caractérisé en ce que** l'articulation (9) est disposée/constituée à distance d'une ligne médiane longitudinale du dossier (3).

9. Ensemble de siège selon la revendication 8, **caractérisé en ce que** le dossier (3) est supporté sur le support (6) de façon pivotante sous l'action d'une articulation pivotante (4) autour d'un axe de pivotement (5), dans lequel l'axe de pivotement (5) est disposé sur le côté de la ligne médiane longitudinale du dossier (3) qui est opposé à l'articulation (9).
